Europäisches Patentamt

European Patent Office

Office européen des brevets

(19)

(11) Veröffentlichungsnummer: **0 366 031**
**A1**

(12) **EUROPÄISCHE PATENTANMELDUNG**

(21) Anmeldenummer: 89119578.6

(22) Anmeldetag: 21.10.89

(51) Int. Cl.⁵: **A01D 45/06**

(30) Priorität: 25.10.88 DE 3836270

(43) Veröffentlichungstag der Anmeldung:
02.05.90 Patentblatt 90/18

(84) Benannte Vertragsstaaten:
**AT BE DE ES FR GB IT NL**

(71) Anmelder: **Bretthauer, Jens**
**Eckernförder Strasse 235f**
**D-2300 Kiel 1(DE)**

Anmelder: **Heger, Egon**
**Salzburger Strasse 137**
**D-2300 Kiel 14(DE)**

Anmelder: **Hansen, Hermann**
**Düvelsbecker Weg 11**
**D-2300 Kiel 1(DE)**

(72) Erfinder: **Bretthauer, Jens**
**Eckernförder Strasse 235f**
**D-2300 Kiel 1(DE)**
Erfinder: **Heger, Egon**
**Salzburger Strasse 137**
**D-2300 Kiel 14(DE)**
Erfinder: **Hansen, Hermann**
**Düvelsbecker Weg 11**
**D-2300 Kiel 1(DE)**

(74) Vertreter: **Tönnies, Jan G., Dipl.-Ing.**
**Niemannsweg 133**
**D-2300 Kiel 1(DE)**

(54) **Verfahren und Vorrichtung zum Abtöten von Flachspflanzen im stehenden Bestand.**

(57) Verfahren zum Abtöten von Flachspflanzen im stehenden Bestand, um diese für die spätere Ernte und Verarbeitung zu konditionieren, durch Einführen einer Vielzahl von an ein rotierendes Element (10) angesetzten Stäben (12) von oben in den Bereich unterhalb der Verästelungen der Flachspflanzen und Ausbringen eines die Pflanze angreifenden Mediums oder einer diese angreifenden Energie durch die Stäbe (12) in den Bereich der Stengel der durch die Einwirkung des Mediums abzutötenden Flachspflanzen sowie Vorrichtung zur Durchführung dieses Verfahrens mit einem rotierenden Element (10), das mit einer Vielzahl von Stäben (12) versehen ist, die mit einer das auszubringende Medium führenden Versorgungsleitung (14) kommunizieren und an ihren freien Enden mit Austrittsöffnungen (16) versehen sind, wobei der Drehpunkt der Vorrichtung oberhalb der Köpfe (18) des abzutötenden Flachspflanzenbestandes angeordnet ist, so daß sich die die jeweils in die Flachspflanzen ragenden Stäbe tragende untere Seite des rotierenden Elements (10) gegen die Fahrtrichtung bewegt, wodurch nur eine geringe horizontale Relativbewegung zwischen den Stäben (12) und den Flachspflanzen auftritt.

Fig. 1

## Verfahren und Vorrichtung zum Abtöten von Flachspflanzen im stehenden Bestand

Die Erfindung betrifft ein Verfahren zum Abtöten von Flachspflanzen im stehenden Bestand durch Ausbringen eines die Flachspflanzen angreifenden Mediums, um diese für die spätere Ernte und Verarbeitung zu konditionieren, sowie eine Vorrichtung zur Durchführung dieses Verfahrens.

Während Flachsfasern bisher dadurch gewonnen wurden, daß die Flachspflanzen gerauft, auf dem Feld abgelegt, dort geröstet, also angerottet und die dadurch brüchig gewordenen Holzbestandteile nach Wiederaufnehmen der Flachspflanzen sodann in einer Fabrik durch die Walzen einer Brechmaschine und das Schlagwerk einer Schwingturbine von dem Bast gelöst werden, wird neuerdings vorgeschlagen, die Flachspflanzen dadurch zur Weiterverarbeitung zu konditionieren, daß diese im stehenden Bestand abgetötet und erst nach Trocknung bzw. Anrottung geerntet werden. In der DE 36 39 022 C1 wird weiter eine Vorrichtung vorgeschlagen, die dazu dient, die Flachspflanzen sogar direkt auf dem Feld zu brechen.

Zum Abtöten der Flachspflanzen im stehenden Bestand wird bisher ein Kontaktgift über den Köpfen der Flachspflanzen ausgebracht. Der dabei erforderliche Mitteleinsatz ist erheblich und ökologisch bedenklich. Nachteilig ist weiter, daß das Kontaktgift dabei auch direkt auf die Kapseln wirkt und ein Ausreifen der Same verhindert.

Der Erfindung liegt damit die Aufgabe zugrunde, ein Verfahren der eingangs genannten Art zu schaffen, das unter Schonung der Samen ökologisch unbedenklich ist.

Erfindungsgemäß wird diese Aufgabe gelöst bezüglich des Verfahrens durch die in Anspruch 1, bezüglich der Vorrichtung durch die in Anspruch 10 genannten Merkmale gelöst. Die UNteransprüche geben vorteilhafte Ausbildeungen deises Verfahrens bzw. dieser Vorrichtung an.

Die Erfindung wird im folgenden anhand einer Zeichnung erläutert. Dabei zeigt:

Fig. 1 eine Ansicht der Vorrichtung,

Fig. 2 eine Schnittansicht entlang der Linie II-II von Fig. 1

Fig. 3 eine schematische Darstellung eines alternativen Ausführungsbeispiels,

Fig. 4 eine Figur 2 entsprechende, gebrochene Darstellung, bei der die Stäbe mit Gelenken versehen sind, und

Fig. 5 eine alternative Ausführungsform, bei der die Vorrichtung nach Art einer Pick-up-Haspel eines Mähdreschers ausgebildet ist.

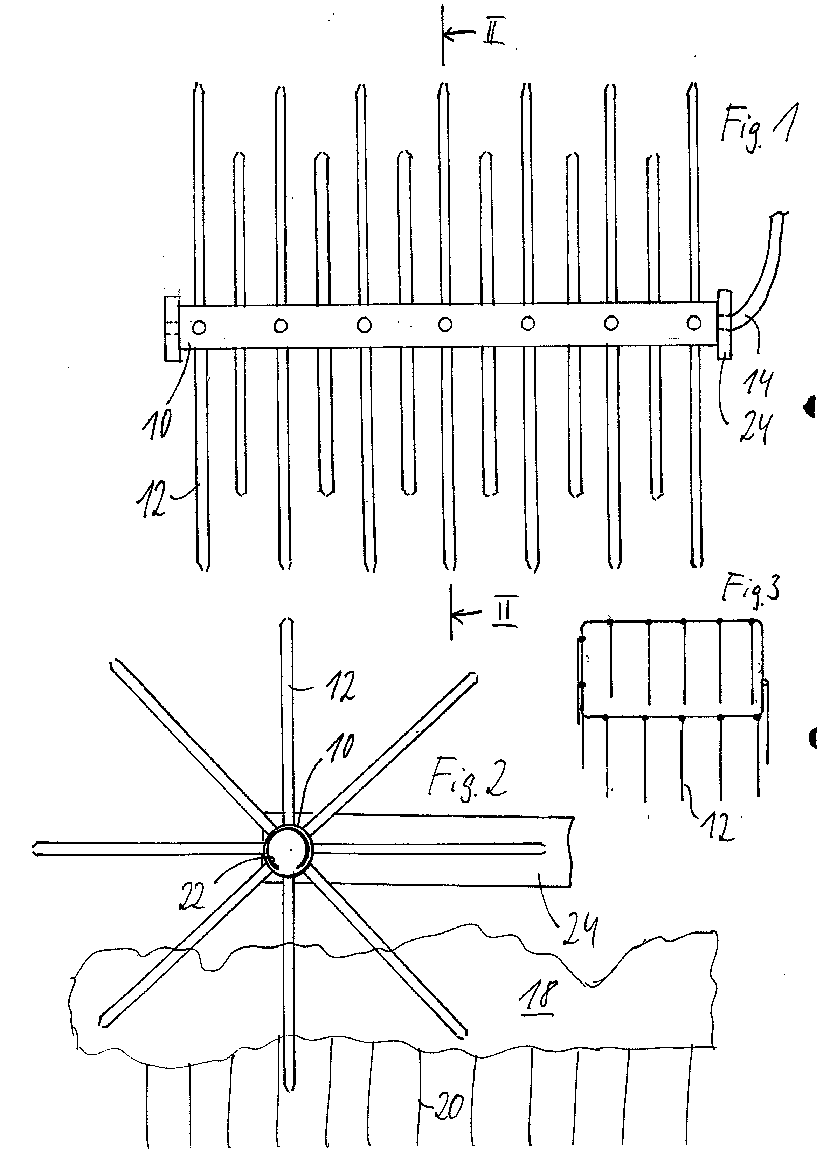

Die Vorrichtung nach Figur 1, die auf die Hubhydraulik eines Schleppers aufsetzbar oder aber von einem von einem Schlepper gezogenen Wagen aufgesetzt ist, besteht aus einem Rohr 10, das mit einer Vielzahl von radial nach außen stehenden Stäben 12 versehen ist, wobei die Stäbe 12 zum Rohr 10 hin offen sind. Im Bereich ihrer freien Enden sind die Stäbe 12 mit Austrittsöffnungen 16 versehen.

Das Rohr 10 ist über eine Versorgungsleitung 14 über eine (nicht gezeigte) Pumpe mit einem (ebenfalls nicht gezeigten) Tank verbunden.

Das Rohr 10 ist mit einem Innenrohr 22 versehen, dessen Außendurchmesser dem Innendurchmesser des Rohrs 10 entspricht und mit den seitlichen Traversen 26, die die Vorrichtung tragen, fest verbunden ist, so daß das Innenrohr 22 nicht drehbar ist. Dieses Innenrohr weist einen achsparallelen, nach unten weisenden Schlitz auf und verschließt so jeweils die Eintrittsöffnungen der Stäbe 12, die jeweils nicht nach unten weisen, erlaubt jedoch eine Zuführ des Mediums zu den Stäben 12, die jeweils nach unten in dem Bereich der Verästelung der abzutötenden Flachspflanzen ragen.

Bei Verwendung wird die Höhe der Vorrichtung derart eingestellt, daß das Rohr 10 oberhalb der Köpfe 18 der abzutötenden Flachspflanzen verläuft. Die Reihen der Stäbe 12 dringen in den Bereich 18 der Köpfe der Flachspflanzen ein, so daß die Vorrichtung über die Flachspflanzen hinweg "läuft". Der Widerstand, den die Flachspflanzen den Stäben entgegenbringen, bewirkt dabei eine Rotation des Rohres 10 um das Innenrohr 11 (es kann jedoch auch ein Hilfsantrieb vorgesehen sein, um die mechanische Belastung der Köpfe der Flachspflanzen zu mindern).

Wenigstens die Spitzen der jeweils nach unten weisenden Stäbe 12 ragen bis in den Bereich der Stengel 20 der Flachspflanzen, also bis unterhalb der Verästelungen der Flachspflanzen.

Das Medium, mit dem die Stengel der Flachspflanzen beaufschlagt werden sollen, wird über die Zuleitung 14 in das Innenrohr unter Druck eingegeben und gelangt durch den Schlitz 24 in dem Innenrohr 22 in die Öffnungen der Stäbe, die jeweils nach unten in den Bereich der Stengel der Flachspflanzen ragen. Auf diese Weise wird verhindert, daß auch die Köpfe der Flachspflanzen mit dem die Pflanzen angreifenden Medium beaufschlagt werden, so daß die Flachspflanzen von unten nach oben absterben, was eine Reifung der Samen in den Kapseln ermöglicht.

Als Medium kommen die bekannten Herbizide, insbesondere auch Kontaktgifte, in Betracht. Auch bei deren Verwendung besteht gegenüber der bisherigen Art und Weise der Ausbringung ein erheblicher Vorteil, da eine weit geringere Menge des Herbezids auszubringen ist, weil dieses sich lediglich an den Stengeln der Flachspflanzen, nicht aber an deren Köpfen abzusetzen braucht, um die gewünschte Wirkung zu erreichen.

Bei Nutzung von Energie zum Abtöten der Flachspflanzen, etwa durch Beaufschlagung der Stengel mit brennenden Heizgasen, mit Wasserdampf, mit Infrarotstrahlen, Laser licht oder Mikrowellen ist das Verfahren ökologisch noch unbedenklicher. Die Anordnung entsprechender Strahlungsquellen an den Spitzen der Stäbe oder aber die Lenkung der Energie - etwa über Spiegel - ist dem Fachmann geläufig.

Anders als bei dem dargestellten Ausführungsbeispiel können die Streben auch derart lang ausgebildet sein, daß diese bis auf den Boden des Feldes reichen und das die Pflanzen angreifende Medium bzw. die Energie nur dicht oberhalb der Bodenoberfläche abgeben.

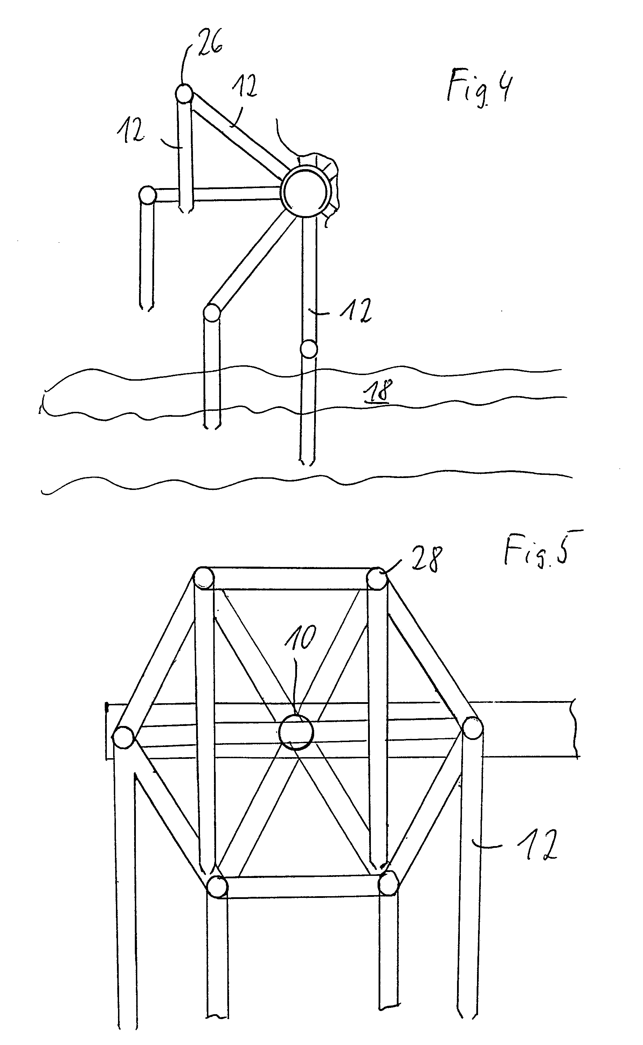

Figur 3 deutet ein alternatives Ausführungsbeispiel an, bei der die Streben 12 an Ketten oder Bändern angesetzt sind, die entlang einer in Fahrtrichtung weisenden im wesentlichen rechteckigen Bahn geführt werden. Bei einem derartig ausgeführten Ausführungsbeispiel der Erfindung tauchen die Streben exakt senkrecht in die Köpfe der Flachspflanzen ein, bewegen sich in horizontaler Richtung zu diesen nicht und tauchen nach Zurücklegung einer entsprechenden Strecke durch den Schlepper wieder senkrecht aus den Köpfen der Flachspflanzen heraus.

Figur 4 zeigt ein erstes bevorzugtes Ausführungsbeispiel der Erfindung, bei der die Stäbe 12 mit einem Gelenk 26 versehen ist. Dieses Gelenk 26 ermöglicht es dem vorderen Teil 12a der Stäbe 12 sich relativ zu dem hinteren Teil 12b der Stäbe 12 zu verschwenken. Da das Gelenk 26 leicht außermittig zur Spitze der Stäbe 12 hin angeordnet ist, kollidiert das vordere Teil 12a bei dem Verschwenken nicht mit dem Rohr 10.

Bei dem in Figur 5 dargestellten Ausführungsbeispiel ist die Vorrichtung nach Art einer Pick-up-Haspel eines Mähdreschers mit einer Mehrzahl von sich parallel zu dem Rohr 10 auf einer gedachten Zylindermantelfläche um dieser erstreckenden Holmen 28 versehen. Die Stäbe 12 sind an diese Holme um 360° verschwenkbar ausgebildet. Es versteht sich, daß bei diesem Ausführungsbeispiel der Fluß des Mediums von dem Rohr 10 zu den Holmen 28 in die Stäbe 12 zu deren Spitze hin möglich sein muß.

## Ansprüche

1. Verfahren zum Abtöten von Flachspflanzen im stehenden Bestand, um diese für die spätere Ernte und Verarbeitung zu konditionieren, gekennzeichnet durch Einführen einer Vielzahl von an ein rotierendes Element angesetzten Stäben von oben in den Bereich unterhalb der Verästelungen der Flachspflanzen und Ausbringen eines die Pflanze angreifenden Mediums durch die Stäbe oder einer die Pflanze angreifenden Energie in den Bereich der Stengel der durch die Einwirkung des Mediums abzutötenden Flachspflanzen.

2. Verfahren nach Anspruch 1, dadurch gekennzeichnet, daß das Medium ein brennendes Heizgas, Wasserdampf, eine Chemikalie, insbesondere ein Herbizid, oder aber eine biologische Kultur ist.

3. Verfahren nach Anspruch 1, dadurch gekennzeichnet, daß die Energie Infrarotstrahlung, Laserlicht oder Mikrowellenstrahlung ist.

4. Vorrichtung zur Durchführung des Verfahrens nach einem der vorangehenden Ansprüche, gekennzeichnet durch ein rotierendes Element (10), das mit einer Vielzahl von Stäben (12) versehen ist, die mit einer das auszubringende Medium führenden Versorgungsleitung (14) kommunizieren und an ihren freien Enden mit Austrittsöffnungen (16) versehen sind, wobei der Drehpunkt der Vorrichtung oberhalb der Köpfe (18) des abzutötenden Flachspflanzenbestandes angeordnet ist, so daß sich die der jeweils in die Flachspflanzen ragenden Stäbe tragende untere Seite des rotierenden Elements (10) gegen die Fahrtrichtung bewegt, wodurch nur eine geringe horizontale Relativbewegung zwischen den Stäben (12) und den Flachspflanzen auftritt und wobei ein Mittel zum Beaufschlagen lediglich der jeweils nach unten in den Bereich der Stengel (20) der Flachspflanzen weisenden Stäbe (12) vorgesehen ist.

5. Vorrichtung nach Anspruch 4, dadurch gekennzeichnet, daß das rotierende Element als Rohr (10) ausgebildet ist, das das auszubringende Medium von der Versorgungsleitung (14) zu den zu dem Rohr (10) hin offenen Stäben (12) führt.

6. Vorrichtung nach Anspruch 5, dadurch gekennzeichnet, daß das Mittel zum Beaufschlagen lediglich der jeweils nach unten weisenden Stäbe mit dem Medium als in das Rohr (10) eingesetztes, sich nicht mit diesem drehenden, die mit dem Rohr (10) kommunizierenden Öffnungen der jeweils nicht nach unten weisenden Stäbe (12) verschließendes, mit einem nach unten weisenden, achsenparallel versehenes Innenrohr (22) ausgebildet ist.

7. Vorrichtung nach einem der Ansprüche 4 bis 6, dadurch gekennzeichnet, daß die Stäbe (12) auf dem rotierenden Element (10) reihenweise angeordnet sind, wobei die Stäbe benachbarter Reihen jeweils versetzt angeordnet sind.

8. Vorrichtung nach einem der Ansprüche 4 bis 7, dadurch gekennzeichnet, daß die Stäbe (12) über eine Kette oder dergleichen entlang einer sich in Fahrtrichtung erstreckenden, im wesentlichen rechteckigen Bahn geführt werden, wobei die Stäbe (12) derart an die Kette oder dergleichen angelenkt ist, daß diese immer nach unten weisen.

9. Vorrichtung nach einem der Ansprüche 4 bis 8, dadurch gekennzeichnet, daß die Stäbe (12) mit einem leicht zur Spitze hin außermittig angeordneten Gelenk (26) versehen sind, um daß sich der vordere Teil (12a) der Stäbe (12) um 360° zu dem hinteren Teil (12b) der Stäbe (12) verschwenken kann.

10. Vorrichtung nach einem der Ansprüche 4 bis 9, dadurch gekennzeichnet, daß diese nach Art der Pick-up-Haspel eines Mähdreschers mit einer Mehrzahl von sich parallel zu dem Rohr (10) auf einer gedachten Zylindermantelfläche um dieses erstreckenden Holmen (28), an die die Stäbe (12) um diese um 360° verschwenkbar angelenkt sind, ausgebildet ist.

11. Vorrichtung nach einem der Ansprüche 4 bis 10, dadurch gekennzeichnet, daß die Vorrichtung auf die Hubhydraulik eines Schleppers aufsetzbar ausgebildet ist.

Fig. 1

Fig. 2

Fig. 3

II

II

10

12

14

24

12

10

22

24

18

20

12

Fig. 4

26

12

12

12

18

Fig. 5

28

10

12

# EUROPÄISCHER RECHERCHENBERICHT

:N

EP 89119578.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.)5 |
|---|---|---|---|
| A | DLG-MITTEILUNGEN 24/1986, DLG-Verlag, Rusterstraße 13, 6000 Frankfurt/Main W.MUTZ "Im festen Griff der Schwinger" * Seiten 1310-1312 * -- | | A 01 D 45/06 |
| A | DD - A1 - 241 002 (INSTITUT FÜR DÜNGUNGS- FORSCHUNG LEIPZIG-POTSDAM) * Gesamt * ---- | | |

| RECHERCHIERTE SACHGEBIETE (Int. Cl.4) |
|---|
| A 01 C 5/00 |
| A 01 C 21/00 |
| A 01 C 23/00 |
| A 01 D 45/00 |
| A 01 D 57/00 |
| A 01 G 25/00 |

:N

Der vorliegende Recherchenbericht wurde für alle Patentansprüche erstellt.

| Recherchenort | Abschlußdatum der Recherche | Prüfer |
|---|---|---|
| WIEN | 27-12-1989 | SCHNEEMANN |